# EUROPÄISCHE PATENTSCHRIFT

(11) **EP 1 215 383 B1**
(45) Veröffentlichungstag und Bekanntmachung des Hinweises auf die Patenterteilung: **10.12.2008**
(21) Anmeldenummer: 01127850.4
(22) Anmeldetag: 22.11.2001
(51) Int. Cl.: F02C 9/42, B64C 11/50, B64D 31/12

(54) **Verfahren zur Regelung von Fluggasturbinen**
Control system for aircraft gas turbine engines
Procédé de réglage d'une turbine à gaz pour aéronef

(30) Priorität: 14.12.2000 DE 10062252
(43) Veröffentlichungstag der Anmeldung: 19.06.2002
(73) Patentinhaber: Rolls-Royce Deutschland Ltd & Co KG, 15827 Dahlewitz (DE)
(72) Erfinder: Stephan, Volker, 15827 Blankenfelde (DE)
(74) Vertreter: Weber, Joachim

(56) Entgegenhaltungen:
- FR-A- 836 375
- US-A- 2 853 851
- US-A- 3 084 889
- US-A- 3 518 023
- US-A- 4 550 561

## Beschreibung

Die Erfindung bezieht sich auf ein Verfahren zur Regelung von Triebwerken eines mit mindestens zwei Triebwerken ausgestatteten Flugzeugs.

Während bestimmter Flugphasen können bei Flugzeugen einige Frequenzen des Triebwerks - verursacht durch die Drehzahlen der Hochdruckwelle (NH) bzw. der Niederdruckwelle (NL) - die Flugzeugzelle zu Schwingungen anregen. Diese werden als Lärm oder Vibrationen von den Passagieren wahrgenommen. Weiterhin besteht die Möglichkeit einer Interferenz zwischen den Triebwerken, da diese selten genau mit den selben Drehzahlen laufen. Hierbei ergeben sich Schwebungen oder stehende Wellen. Selbst bei der Regelung der Drehzahl der Niederdruckwelle sind auch nur die Niederdruckverdichter synchronisiert, so dass es noch zu Störungen durch die Drehzahl der Hochdruckwelle kommen kann.

Die Unterschiede zwischen den einzelnen Triebwerken haben unter anderem folgende Ursachen: Eine der Ursachen liegt im unterschiedlichen Alter der Triebwerke nach Austausch eines Triebwerks. Weiterhin sind Ungenauigkeiten der Messgrößen und damit die Erzeugung von unterschiedlichen Regelgrößen Ursache für unterschiedliches Verhalten der Triebwerke. Zudem ergeben sich stets Fertigungstoleranzen, die sich entsprechend auswirken.

Flugtriebwerke werden in der Regel einzeln betrachtet und entsprechend einzeln geregelt. Nur in wenigen Fällen werden sie in ihrem Zusammenspiel betrachtet, beispielsweise bei Notfällen oder dem so genannten Thrust Vectoring.

Die Möglichkeit, beide Triebwerke regelungstechnisch im Einsatz zu verknüpfen, ist nur aus wenigen Fällen bekannt. So ist es etwa möglich, bei Ausfall des Seitenruders durch unterschiedlichen Schub auf beiden Triebwerken Kurvensteuerungen vorzunehmen. Bei militärischen Anwendungen ist das Thrust Vectoring bekannt (siehe beispielsweise US-PS 5,769,317 oder US-PS 6,105,901).

Aus dem Stand der Technik ergeben sich eine Reihe erheblicher Nachteile. So ist es nicht möglich, die Wechselwirkung zwischen zwei oder mehr Triebwerken zu berücksichtigen und dabei die in den Triebwerken und im Flugzeug bereits vorhandenen Komponenten entsprechend zu nutzen. Infolgedessen ist das Geräuschniveau in den Flugzeugkabinen höher. Die Flugzeughersteller benötigen mehr Dämm-Material, welches zu höherem Gewicht und höheren Kosten führt. Weiterhin ergibt sich bei der Entwicklung von Flugzeugen ein erheblicher Arbeitsaufwand zur Verringerung von Schwingungen.

Die FR 836 375 A betrifft eine Einrichtung zum Synchronisieren von Antrieben mehrmotoriger Propellerflugzeuge. Dabei liegt insbesondere das Problem zugrunde, die Antriebsschrauben, die als Verstellpropeller ausgebildet sind, zu synchronisieren. Das hierbei verwendete Prinzip besteht darin, eine elektrische Regelvorrichtung mit einem Stator und einem Rotor zu verwenden, und diese entsprechend zu erregen, um die elektrische Propellerverstellung vorzunehmen.

In dem US-Patent US 3 084 889 A wird vorgeschlagen, die einzelnen Triebwerke eines Flugzeugs so miteinander zu koppeln, dass der Propeller eines Triebwerks auch dann in Drehung versetzt wird, wenn dieses keine oder nur eine verringerte Leistung bringt. Hierzu wird eine komplizierte Ausgestaltung der Propeller vorgeschlagen, um diese zwangsweise durch Luftströmungen oder Gasströmungen anzutreiben.

Die US 2 853 851 A sieht vor, den Schub der einzelnen Triebwerke aneinander anzupassen und somit einen Geradeausflug des Flugzeugs sicherzustellen. Hierzu wird das jeweilige Triebwerk schwenkbar gelagert und mittels eines Schwenkmechanismus zur Längsachse des Flugzeugs geneigt.

Der Erfindung liegt die Aufgabe zugrunde, unerwünschte Schwingungen und damit verbunden unerwünschte Geräuschentwicklungen während des Fluges eines Flugzeuges zu vermeiden.

Erfindungsgemäß wird die Aufgabe durch die Merkmale des unabhängigen Anspruchs gelöst.

Erfindungsgemäß ist somit vorgesehen, die Triebwerksparameter mittelbar zu ändern. Dies kann durch die Entnahme oder Hinzufügung von Leistung, Energie, Fluiden und/oder Stoffen erfolgen. Eine der Möglichkeiten besteht darin, Zapfluft zu entnehmen. Erfindungsgemäß werden diese Maßnahmen nicht auf allen Triebwerken gleichermaßen durchgeführt, vielmehr werden bewusst Unterschiede zwischen den einzelnen Triebwerken zugelassen und erzeugt, um damit die gewünschten Änderungen der Triebwerksparameter zu erhalten.

Erfindungsgemäß ist es somit möglich, die Drehzahlen der Triebwerke (Fluggasturbinen) so zu ändern, dass Vibrationen und Schwingungen, die zu unerwünschtem Schall führen, vermieden werden.

Durch die sich zusätzlich ergebende Veränderung des Schubs der einzelnen Triebwerke ergibt sich der positive Effekt, dass die Seitenrudertrimmung vermindert werden kann. Da kein Flugzeug absolut gerade fliegt, ist es stets notwendig eine gewisse Seitenrudertrimmung vorzusehen. Diese führt natürlicherweise zu größerem Luftwiderstand und damit zu einem schlechteren Wirkungsgrad des gesamten Flugzeuges. Durch die erfindungsgemäßen Maßnahmen ergibt sich der zusätzliche vorteilhafte Effekt, dass ein unterschiedliches Giermoment durch Beeinflussung der Triebwerksparameter ausgeglichen werden kann.

Da die als nachteilig aus dem Stand der Technik beschriebenen Effekte meist nur in einem sehr engen Frequenzbereich (Resonanzfrequenz) auftreten, kann eine geringe Verschiebung der Erregerfrequenz (d.h. der Drehzahlen) durch die erfindungsgemäßen Maßnahmen ausreichen, um die negativen Effekte stark zu mindern oder sogar völlig zu beseitigen.

Das erfindungsgemäße Verfahren kann beispielsweise mittels folgender Methoden umgesetzt werden:
Es ist möglich, hydraulische Leistungsübertragung (positiv/negativ) zwischen Triebwerken, die hydraulische Motoren/Pumpen umfassen, abhängig von den Flugbedingungen, zu ändern. Durch eine unterschiedliche hydraulische Leistungsentnahme aus den Triebwerken durch das Flugzeug lassen sich somit die Parameter ändern.

Bei einer hydraulischen Koppelung der Wellen eines Triebwerks lassen sich die Drehzahlen gegeneinander verschieben.

Erfindungsgemäß ist auch eine elektrische Leistungsübertragung möglich (positiv/negativ), dies ist besonders bei "vollelektrischen" Triebwerken mit Leistungsaustausch zwischen den Wellen und den einzelnen Triebwerken auf einfache Weise realisierbar.

Eine weitere, besonders wirkungsvolle Maßnahme ist die Entnahme von Zapfluft aus einem der Triebwerke.

Es versteht sich, dass erfindungsgemäß die genannten Maßnahmen und Effekte kombiniert werden können, um einen Gesamteffekt in einem Parameter, beispielsweise bei der Drehzahl der Niederdruckwelle, zu vergrößern. Weiterhin kann eine Kombination zu mehr Freiheitsgraden führen, um neben einem Hauptparameter, beispielsweise der Drehzahl der Niederdruckwelle, auch Nebenparameter, beispielsweise die Drehzahl der Hochdruckwelle zu optimieren. Dies ist beispielsweise dann vorteilhaft, wenn die Niederdruckwelle bestimmend für störende Schwingungen ist, aber auch die Hochdruckwelle einen Störanteil liefert.

Im Folgenden wird die Anwendung der Erfindung auf Triebwerke mit zwei Wellen beschrieben. Die Erfindung ist jedoch auch bei Triebwerken mit einer beliebigen Anzahl von Wellen anwendbar.

### Effekt durch Hydraulikmaßnahmen

Aus dem Stand der Technik ist es bekannt, dass einzelne Triebwerke oder Triebwerksgruppen mit getrennten Regelkreisen betrieben werden. Gemeint sind dabei hydraulische Arbeitskreise (die z.B. die Klappen oder das Fahrwerk betätigen). Es gibt z.B. Triebwerke, bei denen zwei hydraulische Pumpen in einen Kreis einspeisen und auch Bauarten, in denen beide Pumpen in unterschiedliche Kreise einspeisen. Je nach Anordnung und Betätigen von Ventilen (ggf. Hinzufügung von Ventilen), können die Triebwerke einen unterschiedlichen Beitrag zum hydraulischen System leisten, d.h. ihre Belastung und damit Parameter werden unterschiedlich sein. Bei zweistrahligen Flugzeugen sind deshalb die Aufgaben der beiden Kreise meist getrennt. Ein Leistungsaustausch zwischen den beiden Triebwerken ist somit durch konstruktive Änderungen möglich. Bei einem dreistrahligen Flugzeug kann die Hydraulik des dritten Triebwerks als Redundanz für die beiden anderen hydraulischen Systeme genutzt werden. Somit ist die erfindungsgemäß vorgesehene Beeinflussung möglich. Bei vierstrahligen Flugzeugen sind in der Regel immer zwei Triebwerke auf einen Regelkreis geschaltet, so dass auch hier eine Leistungsänderung der hydraulischen Lastannahme zum Verändern der Leistungsparameter benutzt werden kann.

Sollten die verschiedenen Wellen eines Triebwerks hydraulisch gekoppelt sein, so können beide Drehzahlen (Hochdruckwelle und Niederdruckwelle) geändert werden (NL = f(NH)). Hierbei bedeutet NL die Drehzahl der Niederdruckwelle, während NH die Drehzahl der Hochdruckwelle ist.

### Effekt durch Elektrik

Es gelten fast die gleichen Ausführungen wie oben stehend im Hinblick auf die Hydraulik. Die unterschiedliche Leistungsentnahme aus beiden Triebwerken ist jedoch weitaus einfacher zu erzielen. Bei "vollelektrischen" Triebwerken ist der Leistungsaustausch zwischen den verschiedenen Triebwerken und von Wellen zwischen Triebwerken auf sehr einfache Weise möglich.

### Effekt durch Customer Bleed / Zapfluft

In der Regel wird während des gesamten Fluges Zapfluft genommen, welche beide Triebwerke in ein gemeinsames System einspeisen. Wenn der Druckverlust innerhalb eines Systems von Zapfstelle bis Mischung unterschiedlich zum System des anderen Triebwerks ist, unterscheiden sich auch die Massenströme zwischen beiden Triebwerks-Systemen. Dies führt zu einer unterschiedlichen Beeinflussung der Triebwerke und letztendlich zu geringfügigen Drehzahländerungen, die für den erfindungsgemäßen Effekt nutzbar sind.

Erfindungsgemäß werden somit unterschiedliche Verhältnisse in den unterschiedlichen Zapfluftsystemen der Triebwerke erzeugt. Wie erwähnt, ändern sich infolge der unterschiedlichen Entnahme von Zapfluft die Drehzahlen der Niederdruckwelle und der Hochdruckwelle (NL bzw. NH). Dies ist abhängig von der gewählten Regelung (Drehzahl der Niederdruckwelle), NL oder Druckverhältnis über das Triebwerk (Schubparameter), EPR. Hierdurch wird erfindungsgemäß der Resonanzbereich der Schwingungen verlassen.

Der benötigte unterschiedliche Druckverlust durch Entnahme von Zapfluft kann am einfachsten durch unterschiedliches Verstellen der in dem System vorhandenen Drosselklappen erreicht werden. Im Extremfall kann ein System vollständig geschlossen werden, während das andere geöffnet ist. In kleinerem Maße kann auch ein unterschiedliches Kühlen der Zapfluft innerhalb des mit Fanluft betriebenen Wärmetauschers erfolgen. Durch die unterschiedliche Entnahme von Zapfluft besteht somit ein Freiheitsgrad bezüglich der Optimierung der gewünschten Parameter (NL, NH, FN (Nettoschub)).

Im Folgenden werden die erfindungsgemäß vorgeschlagenen Änderungen anhand dreier typischer Flugphasen erläutert. Dabei zeigen die Tabellen Extremfälle in Bezug auf die Zapfluftverteilung zwischen den beiden Triebwerken, ausgehend von einem typischen Wert für die Zapfluftentnahme. Die Spalte "normal" bedeutet, dass die gleiche Menge Zapfluft von den Triebwerken entnommen wird. Der Extremfall - doppelte Zapfluft von einem Triebwerk, keine Zapfluft von dem anderen - ist in den Spalten "abnormal" und "keine" aufgeführt.

Als Ergebnis der maximalen Zapfluftentnahme wird sich der Schub in verschiedener Weise ändern, weil während der Berechnungen bereits "EPR bleed debits" benutzt wurden (EPR = Druckverhältnis über das Triebwerk (Schubparameter)). Diese ungleichmäßige Schubverteilung bedingt ein Giermoment, das entweder erwünscht ist oder korrigiert werden muss. Im ersten Fall sind die erzielten ΔNH größer. Im einfachsten Fall kann man das Giermoment dadurch vermeiden, dass keine EPR-Debits verwendet werden. Dieses Verhalten, d.h. konstanter Schub, wurde bei den Beispielen dadurch angenähert, dass die Berechnung mit konstantem NL durchgeführt wurde.

Die Ergebnisse der Spalten "normal" sind der Ausgangspunkt der Berechnungen für EPR- und NL-Regelungen. Ändert sich bei der EPR-Regelung die Zapfluftentnahme, so ändern sich der Schub, NL, NH etc. Bei NL-Regelungen bleibt NL und damit näherungsweise der Schub gleich, während sich NH ändert.

### Start

**Tabelle 1: Start, EPR Regelung**

| **EPR Regelung** | | | | | |
|---|---|---|---|---|---|
| Zapfluft | normal | abnormal | keine | max. delta | Kommentar |
| LP Zapfluft [lb/s] | 0.5 | 1.0 | 0.0 | 1.0 | typischer Wert |
| EPR [-] | 1.4991 | 1.4861 | 1.5144 | 0.0283 | |
| Netto Schub FN [lb_{f}] | 11616.6 | 11372.1 | 11902.6 | 530.5 | durchschnittlicher Schub = 11637 lb_{f}, d. h. 20.4 lb_{f} höher. |
| sfc [lb/(lb_{f}*s)] | 0.4829 | 0.4858 | 0.4801 | 0.0057 | durchschnittlicher sfc unverändert |
| SOT [K] | 1499.2 | 1495.6 | 1504.5 | 8.9 | Im schlimmsten Fall wird ein Triebwerk 5.3 K heißer betrieben, als normal. |
| NL [rpm] | 6644.8 | 6599.0 | 6695.6 | 96.6 | |
| NH [rpm] | 14894.5 | 14866.5 | 14929.3 | 62.8 | |

**Tabelle 2: Start, NL Regelung**

| **N1 Regelung** | | | | | |
|---|---|---|---|---|---|
| Zapfluft | normal | abnormal | keine | max. delta | Kommentar |
| LP Zapfluft [lb/s] | 0.5 | 1.0 | 0.0 | 1.0 | typischer Wert |
| EPR [-] | 1.4991 | 1.4993 | 1.4987 | 0.0006 | |
| Netto Schub FN [lb_{f}] | 11616.6 | 11618.0 | 11615.3 | 2.7 | durchschnittlicher Schub = 11616.7 lb_{f}, d.h. unverändert |
| sfc [lb/(lbf*s)] | 0.4829 | 0.4857 | 0.4801 | 0.0056 | durchschnittlicher sfc =0.4829 => +0.0% |
| SOT [K] | 1499.2 | 1505.6 | 1492.8 | 12.8 | Im schlimmsten Fall wird ein Triebwerk 6.4 K heißer betrieben, als normal. |
| NL [rpm] | 6644.8 | 6644.8 | 6644.8 | 0 | konstant gesetzt, um konstanten Schub zu erhalten! |
| NH [rpm] | 14894.5 | 14906.7 | 14882.3 | 24.4 | |

Wenn das Triebwerk nicht "derated" ist, erhöht sich die SOT während des Starts um 5,3 K (oder 6,4 K). Ein maximales ΔNL von 96,6 rpm und ein maximales ΔNH von 62,8 rpm kann erreicht werden.

### Reiseflug

**Tabelle 3: Reiseflug, EPR Regelung**

| **EPR Regelung** | | | | | |
|---|---|---|---|---|---|
| Zapfluft | normal | abnormal | keine | max. delta | Kommentar |
| LP Zapfluft [lb/s] | 0.5 | 1.0 | 0.0 | 1.0 | typischer Wert |
| EPR [-] | 1.6786 | 1.6552 | 1.6997 | 0.0445 | |
| Netto Schub FN [lb_{f}] | 3682.9 | 3575.9 | 3780.6 | 204.7 | durchschnittlicher Schub = 3678.3 lbf |
| sfc [lb/(lbf*s)] | 0.6521 | 0.6581 | 0.6470 | 0.0111 | durchschnittlicher sfc = 0.65255 => +0.07% |
| SOT [K] | 1453.9 | 1451.0 | 1456.3 | 5.3 | Im schlimmsten Fall wird ein Triebwerk 2.4 K heißer betrieben, als normal. |
| NL [rpm] | 6793.4 | 6700.0 | 6883.3 | 183.3 | |
| NH [rpm] | 14235.7 | 14202.2 | 14265.0 | 62.8 | |

**Tabelle 4: Reiseflug, NL Regelung**

| **NL Regelung** | | | | | |
|---|---|---|---|---|---|
| Zapfluft | normal | abnormal | keine | max. delta | Kommentar |
| LP Zapfluft [lb/s] | 0.5 | 1.0 | 0.0 | 1.0 | typischer Wert |
| EPR [-] | 1.6786 | 1.6806 | 1.6759 | 0.0047 | |
| Netto Schub FN [lb_{f}] | 3682.9 | 3683.2 | 3682.0 | 1.2 | durchschnittlicher Schub = 3682.6 lb_{f} |
| sfc [lb/(lb_{f}*s)] | 0.6521 | 0.6599 | 0.6442 | 0.0157 | durchschnittlicher sfc = 0.65205 => +0.0% |
| SOT [K] | 1453.9 | 1465.2 | 1442.5 | 22.7 | Im schlimmsten Fall wird ein Triebwerk 11.3 K heißer betrieben, als normal. |
| NL [rpm] | 6793.4 | 6793.4 | 6793.4 | 0 | konstant gesetzt, um konstanten Schub zu erhalten! |
| NH [rpm] | 14235.7 | 14253.9 | 14216.5 | 37.4 | |

Wenn das Triebwerk nicht "derated" ist, erhöht sich die SOT eines Triebwerks während des Reisefluges um 2,4 K (oder 11,3 K) . Ein maximales ΔNL von 183,3 rpm und ein maximales ΔNH von 62,8 rpm kann erreicht werden.

### Anflug

**Tabelle 5: Anflug, EPR Regelung**

| **EPR Regelung** | | | | | |
|---|---|---|---|---|---|
| Zapfluft | normal | abnormal | keine | max. delta | Kommentar |
| **HP** Zapfluft [lb/s] | 0.5 | 1.0 | 0.0 | 1.0 | typischer Wert |
| EPR [-] | 1.0132 | 1.0128 | 1.0136 | 0.0008 | |
| Netto Schub FN [lb_{f}] | 732.9 | 712.4 | 752.0 | 39.6 | durchschnittlicher Schub = 732.2 lb_{f} |
| Sfc [lb/(lb_{f}*s)] | 1.1785 | 1.2360 | 1.1275 | 0.1085 | durchschnittlicher sfc = 1.1818 => +0.27% |
| SOT [K] | 972.1 | 988.0 | 957.8 | 30.2 | Im schlimmsten Fall wird ein Triebwerk 15.9 K heißer betrieben, als normal. |
| NL [rpm] | 2898.8 | 2876.9 | 2918.4 | 41.5 | |
| NH [rpm] | 11598.0 | 11598.0 | 11598.0 | 0 | wegen HI gilt NHRT26=const. |

Im Landeanflug wird automatisch HI gewählt, was nichts anderes als die Regelung mittels NHRT26 bedeutet, weshalb die Berechnung hier keine Drehzahländerung zeigt. Obwohl HI ausgewählt wird, wird die Regelung sehr oft von einem anderen Kontrollgesetz übernommen (z.B. min P30) und kann somit genauso durch einen anderen Parameter - nämlich Zapfluftwahl - übersteuert werden, siehe Tab. 6.

**Tabelle 6: Anflug, NL Regelung**

| **NL Regelung** | | | | | |
|---|---|---|---|---|---|
| Zapfluft | normal | abnormal | keine | max. delta | Kommentar |
| **HP** Zapfluft [lb/s] | 0.5 | 1.0 | 0.0 | 1.0 | typischer Wert |
| EPR [-] | 1.0132 | 1.0138 | 1.0133 | 0.0006 | |
| Netto Schub FN [lb_{f}] | 732.9 | 733.1 | 734.2 | 1.3 | 733.7 lb_{f} |
| sfc [lb/(lb_{f}*s)] | 1.1785 | 1.2138 | 1.1429 | 0.0709 | durchschnittlicher sfc = 1.17835 => - 0.013% |
| SOT [K] | 972.1 | 989.7 | 956.0 | 33.7 | Im schlimmsten Fall wird ein Triebwerk 27,6 K heißer betrieben, als normal. |
| NL [rpm] | 2898.8 | 2898.8 | 2898.8 | 0 | konstant gesetzt, um konstanten Schub zu erhalten! |
| NH [rpm] | 11598.0 | 11634.3 | 11560.7 | 73.6 | nur möglich, wenn nicht nach HI geregelt wird |

Der Anstieg des sfc im Falle einer EPR Regelung (in diesem Fall genauer: HI Regelung) ist nicht so wichtig, weil die Flugphase relativ kurz ist. Ebenso ist der starke Anstieg der SOT nicht dramatisch, denn er erfolgt auf einer niedrigen Ausgangsbasis. Die geringen Änderungen des Schubes sind wohl physikalisch nicht mehr zu begründen, sondern dürften durch die Ungenauigkeit des Rechenprogramms (iterativer Prozess) begründet sein.

Aus den oben stehenden Erläuterungen ergibt sich, dass es erfindungsgemäß möglich ist, mit wenig Aufwand Lärmentwicklung und Schwingungen positiv zu beeinflussen, da die kritischen Anregungsfrequenzen direkt an der Quelle, d.h. dem Triebwerk geändert und hin zu einer unkritischen Frequenz verschoben werden.

Es ergibt sich somit ein weitaus geringeres Geräuschniveau im Bereich der gesamten Kabine des Flugzeugs, insbesondere dort, wo sich die Triebwerke befinden. Weiterhin wird weniger Dämm-Material benötigt, wodurch das Gewicht des Flugzeugs gesenkt werden kann. Die Erfindung kann durch geringfügige Änderungen am Flugzeugrumpf implementiert werden, wobei sich insgesamt ein sehr geringer Aufwand ergibt. Durch die Möglichkeit, auf eine Rudertrimmung zu verzichten oder diese zu minimieren, ergibt sich zudem ein geringerer Kraftstoffverbrauch und damit gegebenenfalls eine größere Reichweite.

Zusammenfassend ist somit festzustellen, dass die Erfindung den Austausch, die Entnahme bzw. das Hinzufügen von Medien und/oder Leistung zwischen den verschiedenen Wellen eines Triebwerks, zwischen verschiedenen Triebwerken und den Triebwerken mit dem Flugzeug betrifft. Hierdurch ergeben sich erfindungsgemäß zusätzliche Freiheitsgrade zum Erzielen von Triebwerksparametern, um die negativen Resonanzen oder Schwebungen zu verringern oder zu vermeiden.

Die Erfindung bezieht sich auf eine beliebige Anzahl von Triebwerken an einem Flugzeug sowie eine beliebige Anzahl von Wellen der Triebwerke. Im Rahmen der Erfindung ist es beispielsweise möglich, die hydraulische Leistung, die elektrische Leistung oder die Zapfluftentnahme zu beeinflussen.

### Abkürzungsverzeichnis

- EPR: Druckverhältnis über das Triebwerk (Schubparameter)
- FN: Nettoschub
- ISA: Internationale Standardatmosphäre
- NH: Drehzahl der Hochdruckwelle
- NHRT26: aerodynamisch korrigierte Drehzahl der Hochdruckwel- le
- NL: Drehzahl der Niederdruckwelle
- sfc: spezifischer Treibstoffverbrauch
- SOT: Totale Eintrittstemperatur Hochdruckturbine
- HI: High Idle (hohe Leerlaufdrehzahl)
- HP: High Pressure (Hochdruck)

## Patentansprüche

1. Verfahren zur Regelung von Fluggasturbinen eines mit zumindest zwei Fluggasturbinen ausgestatteten Flugzeugs, wobei die Fluggasturbinen-Parameter zumindest einer Fluggasturbine zur Erzeugung von Unterschieden der Fluggasturbinen-Parameter der Fluggasturbine mittelbar geändert werden, um Anregungsfrequenzen hin zu einer unkritischen Frequenz zu verschieben,
wobei die Änderung der Fluggasturbinen-Parameter durch Entnahme oder Hinzufügung von Leistung, hydraulischer oder elektrischer Energie, Fluiden und/oder Stoffen oder, Entnahme von Zapfluft durch erfolgt.

## Claims

1. Method for the control of aircraft gas-turbine engines of an aircraft having at least two gas-turbine engines, with the gas-turbine engine parameters of at least one aircraft gas-turbine engine being indirectly changed to produce differences in the aircraft gas-turbine engine to shift excitation frequencies towards an uncritical frequency,
with the change of the aircraft gas-turbine engine parameters being accomplished by off-take or addition of power, hydraulic or electric energy, fluids and/or substances or by tapping of bleed air.

## Revendications

1. Procédé pour réguler des turbines à gaz d'un avion équipé d'au moins deux turbines à gaz aéronautiques, les paramètres de turbine à gaz d'au moins une turbine à gaz aéronautique étant indirectement modifiés pour créer des différences dans la turbine à gaz aéronautique afin de faire glisser des fréquences d'excitation vers une fréquence non critique,
la modification des paramètres de turbine à gaz aéronautique étant effectuée par prélèvement ou addition de puissance, d'énergie hydraulique ou électrique, de fluides et/ou de matières, ou par prélèvement d'air de purge.
